(19) Europäisches Patentamt
European Patent Office
Office européen des brevets

(11) **EP 4 768 358 A1**

(12) **EUROPEAN PATENT APPLICATION**

(43) Date of publication:
**01.07.2026 Bulletin 2026/27**

(21) Application number: **24223186.8**

(22) Date of filing: **24.12.2024**

(51) International Patent Classification (IPC):
**B60W 40/13** $^{(2012.01)}$

(52) Cooperative Patent Classification (CPC):
**B60W 40/13;** B60W 2040/1307; B60W 2040/1315;
B60W 2520/105

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Realsense, Inc.**
**Cupertino, CA 95014 (US)**

(72) Inventors:
• **HERRANEN, Timo**
**37830 Akaa, Lansi Suomen Laani (FI)**

• **HOROVITZ, Dan**
**7578229 Rishon Letzion (IL)**
• **HAUTAMAKI, Mika**
**37470 Vesilahti, Pirkanmaa (FI)**
• **VAYNBERG, Mark**
**Petah Tikva (IL)**
• **HEIFETS, Gregory**
**7637749 Rehovot (IL)**

(74) Representative: **ABG Intellectual Property Law, S.L.**
**Avenida de Burgos, 16D**
**Edificio Euromor**
**28036 Madrid (ES)**

(54) **CENTER OF GRAVITY DETERMINATION BY FORCE MEASUREMENTS**

(57) A device of a vehicle; the device may include: an interface configured to receive sensor data representing force measurements along at least a first axis of the vehicle from at least two sensors; and a processor configured to: determine sensor positions of the at least two sensors along a second axis a the third axis, wherein the second axis and the third axis are perpendicular to the first axis; instruct a vehicle control system to move the vehicle with an acceleration for a period of time; and determine a center of gravity location along the first axis for a load applying force to the at least two sensors based on the sensor positions , the sensor data representing the force measurements during the period of time, and the acceleration.

FIG. 4

## Description

### Technical Field

This disclosure generally relates to methods and devices for vehicles, specifically for autonomous or automated vehicles.

### Background

The stability and performance of vehicles during motion are critically influenced by their center of gravity, a parameter that directly impacts their handling, braking, and safety. In any moving vehicle, the distribution and height of the center of gravity determine its dynamic stability, particularly during acceleration, deceleration, and directional changes. Improper positioning of the center of gravity, especially a high or off-centered load, can lead to tipping hazards, reduced maneuverability, or increased stopping distances.

The need to maintain precise control over the center of gravity becomes even more pronounced in vehicles designed for automated or semi-automated operations, where human intervention is minimized, and operational safety depends entirely on system-driven monitoring and responses. These challenges underline the importance of accurately measuring not only the planar (horizontal) center of gravity but also its vertical component, a task critical for enhancing the safety and performance of a broad range of vehicle types, including automated mobile robots (AMRs) and automated guided vehicles (AGVs).

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIG. 1 shows an exemplary vehicle and a mobility system.
FIG. 2 shows an exemplary control system of the vehicle.
FIG. 3 illustrates an illustration of a vehicle in accordance with various aspects described herein.
FIG. 4 shows an illustrative example of a device.
FIG. 5 shows an example of a flow diagram in accordance with aspects described herein.
FIG. 6 illustrates an example of a carrier structure to carry a load.
FIG. 7 shows an schematic illustration of a vehicle.
FIG. 8 shows an example of a method.

### Description

The following detailed description refers to the accompanying drawings that show, by way of illustration, exemplary details and aspects in which aspects of the present disclosure may be practiced.

Aspects described herein may relate to determination of a three-dimensional center of gravity (COG) of loads in vehicles, such as automated mobile robots (AMRs) and automated guided vehicles (AGVs).

Vehicles, such as AMRs and AGVs may be employed in various types of operations, including logistics, manufacturing, and material handling environments. Their ability to transport various loads, sometimes with minimal human intervention, may have led to significant enhancements in operational efficiency. However, the stability and safety of such systems may still have critical concerns, especially when handling loads with varying or unknown weight distributions. An important factor affecting the stability of these systems may be the center of gravity of the load. If the COG shifts beyond acceptable thresholds, it can lead to hazards such as tipping, impaired braking performance, or compromised maneuverability.

Existing systems typically employ force sensors, such as load cells, strategically positioned beneath the platform or the load itself to measure the weight distribution and calculate the two-dimensional (X and Y axes) COG. These solutions, while effective for planar stability, fail to consider the height (Z-axis) of the COG. This limitation may leave a significant gap in addressing stability concerns in scenarios where vertical load dynamics play a critical role. The COG may refer to the point where the center of gravity is located, which may also be referred to as center of mass, barycenter, balance point. As described herein the COG location may also be used to refer to the point where the center of gravity is located.

The reliance is towards on detecting the two-dimensional center of gravity in traditional systems to determine if the load is within safe handling limits. This may generally involve the use of four force sensors, such as load cells, positioned at known locations under the load-bearing platform. These force sensors may measure the forces exerted by the load and enable computation of the COG in the horizontal plane. Such systems, however, do not account for the vertical position of the COG. As a result, they cannot assess the full stability profile of the vehicle, particularly in conditions where the load's height significantly alters its dynamic behavior.

The inability to measure the height of the COG may introduce substantial risks. For example, a load with a high vertical COG may create tipping moments during acceleration, deceleration, or turning. Additionally, it may adversely affect the vehicle's emergency braking distance and overall handling characteristics. These factors may necessitate more frequent manual interventions, reducing the efficiency of the automated system and increasing operational costs.

Force sensors, such as load cells, are widely used in diverse applications to measure weight and force distributions. These sensors can operate by converting physical forces, including tension, compression, pressure, or torque, into standardized electrical signals for computational analysis. When strategically positioned, force sensors can determine weight distribution to compute the two-dimensional center of gravity. This method may be applied in automotive, aerospace, and robotics industries to enhance stability and ensure reliable operation of vehicles and machines. Despite their widespread application, current systems do not provide mechanisms to detect or measure the height of the center of gravity. While the horizontal distribution of weight is effectively managed through these solutions, the vertical dynamics may remain unaddressed. This gap may be particularly significant for moving systems, such as AMRs and AGVs, where load stability during motion is important.

Loads with higher centers of gravity are inherently more unstable, particularly during dynamic movements such as acceleration or turning. The reliance on two-dimensional COG calculations does not account for the torque generated due to the height of the COG, which may lead to potentially dangerous scenarios. For instance, a sudden stop or turn might cause a high COG load to tip over, jeopardizing the safety of the vehicle, the load, and the surrounding environment. Furthermore, the inability to dynamically measure and respond to COG height may preclude the implementation of advanced safety protocols. For example, without vertical COG data, the system cannot adjust its acceleration, speed, or turning radius based on the load's stability. This limitation may result in conservative operating parameters, reducing the overall efficiency and throughput of the automated system.

Aspects described herein may aim to overcome the limitations of existing systems by introducing an apparatus and method capable of dynamically measuring the three-dimensional center of gravity, including illustratively the height, of a load on a moving vehicle. This capability may allow for real-time stability assessments during controlled acceleration phases. By employing multiple force sensors and leveraging principles of mechanics, the system may calculate the vertical position of the COG based on the forces exerted on the sensors during motion.

Aspects described herein may particularly be suited for integration into autonomous vehicles, such as AMRs and AGVs, but may equally be applicable to other moving vehicles requiring advanced stability control. Following the detection of the vertical COG, the aspects described herein may include evaluation of whether the calculated height exceeds predefined safety thresholds. Depending on the result, the vehicle may continue operation, reduce speed, or halt entirely to prevent hazardous conditions. Through performing some aspects described herein, a device may enhance operational safety, minimize risks associated with load tipping, and optimize vehicle performance by enabling adaptive speed and movement control based on load dynamics.

A "vehicle" may be understood to include any type of driven or drivable object. By way of example, a vehicle may be a driven object with a combustion engine, a reaction engine, an electrically driven object, a hybrid driven object, or a combination thereof. A vehicle may be or may include an automobile, a bus, a mini bus, a van, a truck, a mobile home, a vehicle trailer, a motorcycle, a bicycle, a tricycle, a train locomotive, a train wagon, a moving robot, a personal transporter, a boat, a ship, a submersible, a submarine, a drone, an aircraft, a rocket, and the like.

A "ground vehicle" may be understood to include any type of vehicle, as described above, which is configured to traverse or be driven on the ground, e.g., on a street, on a road, on a track, on one or more rails, off-road, etc. An "aerial vehicle" may be understood to be any type of vehicle, as described above, which is capable of being maneuvered above the ground for any duration of time, e.g., a drone. Accordingly, similar to a ground vehicle having wheels, belts, etc., for providing mobility on terrain, an "aerial vehicle" may have one or more propellers, wings, fans, among others, for providing the ability to maneuver in the air. An "aquatic vehicle" may be understood to be any type of vehicle, as described above, which is capable of being maneuvered on or below the surface of liquid, e.g., a boat on the surface of water or a submarine below the surface. It is appreciated that some vehicles may be configured to operate as one of more of a ground, an aerial, and/or an aquatic vehicle.

The term "autonomous vehicle" may describe a vehicle capable of implementing at least one navigational change without driver input. A navigational change may describe or include a change in one or more of steering, braking, or acceleration/deceleration of the vehicle. A vehicle may be described as autonomous even in case the vehicle is not fully automatic (for example, fully operational with driver or without driver input). Autonomous vehicles may include those vehicles that can operate under driver control during certain time periods and without driver control during other time periods. Autonomous vehicles may also include vehicles that control only some aspects of vehicle navigation, such as steering (e.g., to maintain a vehicle course between vehicle lane constraints) or some steering operations under certain circumstances (but not under all circumstances), but may leave other aspects of vehicle navigation to the driver (e.g., braking or braking under certain circumstances). Autonomous vehicles may also include vehicles that share the control of one or more aspects of vehicle navigation under certain circumstances (e.g., hands-on, such as responsive to a driver input) and vehicles that control one or more aspects of vehicle navigation under certain circumstances (e.g., hands-off, such as independent of driver input). Autonomous vehicles may also include vehicles that control one or more aspects of vehicle navigation under certain circumstances, such as under certain environmental conditions (e.g., spatial areas, roadway conditions). In some aspects, autonomous vehicles may handle some or all aspects of braking, speed control, velocity control, and/or steering of the vehicle. An autonomous vehicle may include those vehicles that can operate without a driver. The level of autonomy of a vehicle may be described or determined by the Society of Automotive Engineers (SAE) level of the vehicle (e.g., as defined by the SAE, for example in SAE J3016 2018: Taxonomy and definitions for terms related to driving automation systems for on road motor vehicles) or by other relevant professional organizations. The SAE level may have a value ranging from a minimum level, e.g. level 0 (illustratively, substantially no driving automation), to a maximum level, e.g. level 5 (illustratively, full driving automation).

Various aspects described herein may utilize one or more machine learning models to perform or control functions of the vehicle (or other functions described herein). The term "model" as, for example, used herein may be understood as any kind of algorithm, which provides output data from input data (e.g., any kind of algorithm generating or calculating output data from input data). A machine learning model may be executed by a computing system to progressively improve performance of a specific task. In some aspects, parameters of a machine learning model may be adjusted during a training phase based on training data. A trained machine learning model may be used during an inference phase to make predictions or decisions based on input data. In some aspects, the trained machine learning model may be used to generate additional training data. An additional machine learning model may be adjusted during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to predict the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects described herein may utilize one or more classification models. In a classification model, the outputs may be restricted to a limited set of values (e.g., one or more classes). The classification model may output a class for an input set of one or more input values. An input set may include sensor data, such as force measurement data, image data, radar data, LIDAR data, and the like. A classification model as described herein may, for example, classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (illustratively, starting from or using an input set of one or more values). References herein to regression models may contemplate a model that implements, e.g., any one or more of the following techniques (or other suitable techniques): linear regression, decision trees, random forest, or neural networks.

A machine learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward-thinking neural network, a sum-product neural network, and the like. The neural network may include any number of layers. The training of the neural network (e.g., adapting the layers of the neural network) may use or may be based on any kind of training principle, such as backpropagation (e.g., using the backpropagation algorithm).

Throughout the present disclosure, the following terms may be used as synonyms: driving parameter set, driving model parameter set, safety layer parameter set, driver assistance, automated driving model parameter set, and/or the like (e.g., driving safety parameter set). These terms may correspond to groups of values used to implement one or more models for directing a vehicle in the manners described in this disclosure.

Furthermore, throughout the present disclosure, the following terms may be used as synonyms: driving parameter, driving model parameter, safety layer parameter, driver assistance and/or automated driving model parameter, and/or the like (e.g., driving safety parameter), and may correspond to specific values within the previously described sets.

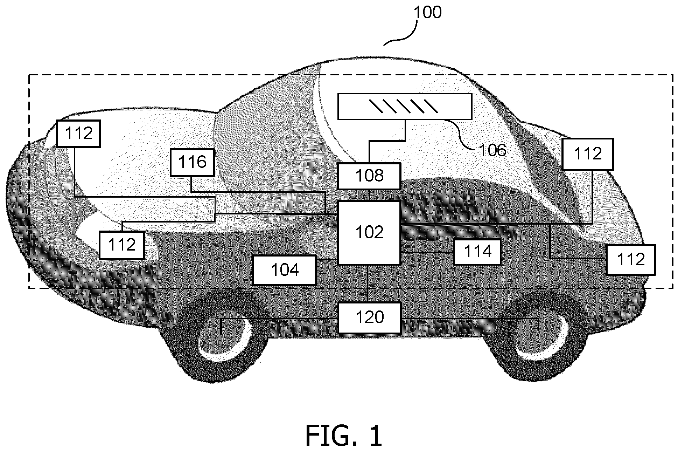

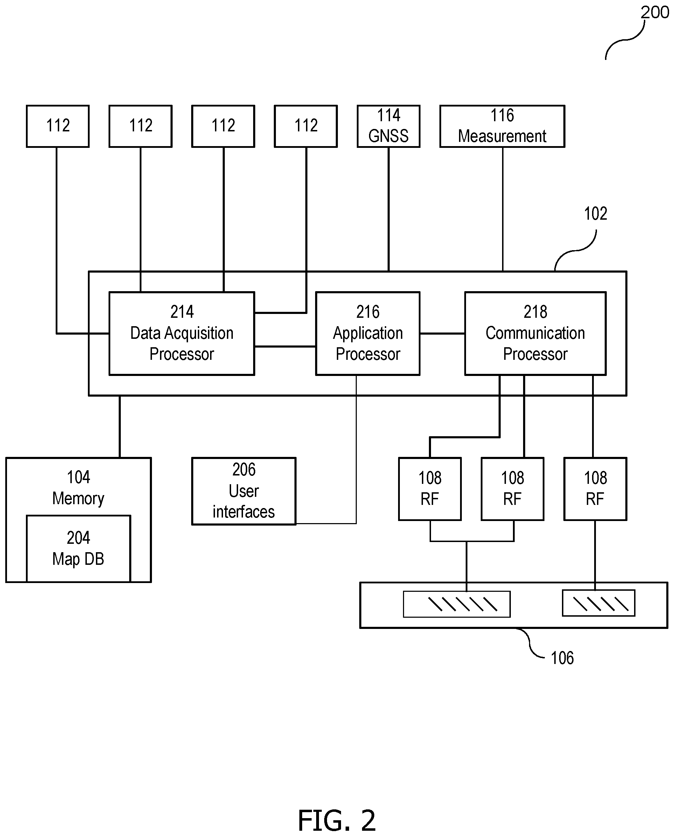

FIG. 1 shows a vehicle 100 including a mobility system 120 and a control system 200 (see also FIG. 2). FIG. 1 and FIG. 2 are provided in a complementary manner. It is appreciated that vehicle 100 and control system 200 are exemplary in nature and may thus be simplified for explanatory purposes. For example, while vehicle 100 is depicted as a ground vehicle, this may be equally or analogously applied to aerial vehicles, water vehicles (e.g. sea vehicles, underwater vehicles), and such. Furthermore, the quantities and locations of elements, as well as relational distances (as discussed above, the figures are not to scale) are provided as examples and are not limited thereto. The components of vehicle 100 may be arranged around a vehicular housing of vehicle 100, mounted on or outside of the vehicular housing, enclosed within the vehicular housing, or any other arrangement relative to the vehicular housing where the components move with vehicle 100 as it travels.

In addition to including a control system 200, vehicle 100 may also include a mobility system 120. Mobility system 120 may include components of vehicle 100 related to steering and movement of vehicle 100. In some aspects, where vehicle 100 is an automobile, for example, mobility system 120 may include wheels and axles, a suspension, an engine, a transmission, brakes, a steering wheel, associated electrical circuitry and wiring, and any other components used in the driving of an automobile. In some aspects, where vehicle 100 is an aerial vehicle, mobility system 120 may include one or more of rotors, propellers, jet engines, wings, rudders or wing flaps, air brakes, a yoke or cyclic, associated electrical circuitry and wiring, and any other components used in the flying of an aerial vehicle. In some aspects, where vehicle 100 is an aquatic or sub-aquatic vehicle, mobility system 120 may include any one or more of rudders, engines, propellers, a steering wheel, associated electrical circuitry and wiring, and any other components used in the steering or movement of an aquatic vehicle.

In some aspects, mobility system 120 may also include autonomous driving functionality, and accordingly may include an interface with one or more processors 102 configured to perform autonomous driving computations and decisions and an array of sensors for movement and obstacle sensing. In this sense, the mobility system 120 may be provided with instructions to direct the navigation and/or mobility of vehicle 100 from one or more components of the control system 200. The autonomous driving components of mobility system 120 may also interface with one or more radio frequency (RF) transceivers 108 to facilitate mobility coordination with other nearby vehicular communication devices and/or central networking components. The devices or components can perform decisions and/or computations related to autonomous driving. The autonomous driving components of mobility system 120 may also interface with one or more radio frequency (RF) transceivers 108 to facilitate mobility coordination with other nearby vehicular communication devices and/or central networking components, such as a traffic infrastructure system, or a roadside unit, or a monitoring system.

The control system 200 may include various components depending on the requirements of a particular implementation. As shown in FIG. 1 and FIG. 2, the control system 200 may include one or more processors 102, one or more memories 104, an antenna system 106 which may include one or more antenna arrays at different locations on the vehicle for radio frequency (RF) coverage, one or more radio frequency (RF) transceivers 108, one or more data acquisition devices 112, one or more position devices 114 which may include components and circuitry for receiving and determining a position based on a Global Navigation Satellite System (GNSS) and/or a Global Positioning System (GPS), and one or more measurement sensors 116, e.g. force sensor, load cell, speedometer, altimeter, gyroscope, velocity sensors, etc.

In accordance with various aspects described herein, the control system 200 may be configured to control the vehicle's 100 mobility via mobility system 120 and/or interactions with its environment, e.g. communications with other devices or network infrastructure elements (NIEs) such as base stations, via data acquisition devices 112 and the radio frequency communication arrangement including the one or more RF transceivers 108 and antenna system 106.

It is to be noted that the control system 200 may include any (control or other) function in the vehicle 100 (e.g. a passenger car, a truck, a motorcycle, an electric bicycle, an electric trolley, etc.) which may affect the behavior of the vehicle (such as a function controlling the vehicle speed, the vehicle position with respect to other vehicle (for example distance control to a vehicle in front), etc.) and/or which may control any external communication of the vehicle for example through C-V2X, ITS-G5, DSRC or any other suitable communication protocol, some of which are described herein and/or which may relate to any automation/autonomy enabling function of a vehicle (including the SAE levels defined as follows:

Level 0 (No Driving Automation)

Level 1 (Driver Assistance)
Level 2 (Partial Driving Automation)
Level 3 (Conditional Driving Automation)
Level 4 (High Driving Automation)
Level 5 (Full Driving Automation))"

The one or more processors 102 may include a data acquisition processor 214, an application processor 216, a communication processor 218, and/or any other suitable processing device. Each processor 214, 216, 218 of the one or more processors 102 may include various types of hardware-based processing devices. By way of example, each processor 214, 216, 218 may include a microprocessor, pre-processors (such as an image preprocessor), graphics processors, a CPU, support circuits, digital signal processors, integrated circuits, memory, or any other types of devices suitable for running applications and for image processing and analysis. Each processor 214, 216, 218 may include any type of single or multi-core processor, mobile device microcontroller, central processing unit, etc. These processor types may each include multiple processing units with local memory and instruction sets. Such processors may include video inputs for receiving image data from multiple image sensors and may also include video out capabilities.

Any of the processors 214, 216, 218 disclosed herein may be configured to perform certain functions in accordance with program instructions which may be stored in a memory of the one or more memories 104. In other words, a memory of the one or more memories 104 may store software that, when executed by a processor (e.g., by the one or more processors 102), controls the operation of the system, e.g., a driving and/or safety system. A memory of the one or more memories 104 may store one or more databases and image processing software, as well as a trained system, such as a neural network, or a deep neural network, for example. The one or more memories 104 may include any number of random-access memories, read only memories, flash memories, disk drives, optical storage, tape storage, removable storage and other types of storage. Alternatively, each of processors 214, 216, 218 may include an internal memory for such storage.

The data acquisition processor 214 may include processing circuity, such as a CPU, for processing data acquired by data acquisition units 112. For example, if one or more data acquisition units are image acquisition units including sensors e.g. one or more cameras, then the data acquisition processor may include image processors for processing image data using the information obtained from the image acquisition units as an input. The data acquisition processor 214 may therefore be configured to create voxel maps detailing the surrounding of the vehicle 100 based on the data input from the data acquisition units 112, i.e., cameras in this example. For example, the one or more data acquisition units may include sensors, and the data acquisition processor 214 may receive information from the sensors and provide sensor data to the application processor. The sensor data may include information indicating the detections performed by the sensors.

Application processor 216 may be a CPU, and may be configured to handle the layers above the protocol stack, including the transport and application layers. Application processor 216 may be configured to execute various applications and/or programs of vehicle 100 at an application layer of vehicle 100, such as an operating system (OS), a user interfaces (UI) 206 for supporting user interaction with vehicle 100, and/or various user applications. Application processor 216 may interface with communication processor 218 and act as a source (in the transmit path) and a sink (in the receive path) for user data, such as voice data, audio/video/image data, messaging data, application data, basic Internet/web access data, etc. Application processor 216 may interface with the data acquisition processor 214 to receive sensor data.

In the transmit path, communication processor 218 may therefore receive and process outgoing data provided by application processor 216 according to the layer-specific functions of the protocol stack, and provide the resulting data to digital signal processor 208. Communication processor 218 may then perform physical layer processing on the received data to produce digital baseband samples, which digital signal processor may provide to RF transceiver 108. RF transceiver 108 may then process the digital baseband samples to convert the digital baseband samples to analog RF signals, which RF transceiver 108 may wirelessly transmit via antenna system 106.

In the receive path, RF transceiver 108 may receive analog RF signals from antenna system 106 and process the analog RF signals to obtain digital baseband samples. RF transceiver 108 may provide the digital baseband samples to communication processor 218, which may perform physical layer processing on the digital baseband samples. Communication processor 218 may then provide the resulting data to other processors of the one or more processors 102, which may process the resulting data according to the layer-specific functions of the protocol stack and provide the resulting incoming data to application processor 216. Application processor 216 may then handle the incoming data at the application layer, which can include execution of one or more application programs with the data and/or presentation of the data to a user via a user interface 206. User interfaces 206 may include one or more screens, microphones, mice, touchpads, keyboards, or any other interface providing a mechanism for user input.

In various aspects provided herein, the resulting data may include various types of information associated with information provided by messages decoded by the communication processor 218 received via designated messaging architectures, such as V2X, ITS, etc. for the control operations of the control system 200 of the vehicle 100, illustratively, for the control of the mobility system 120. In some examples, the data acquisition processor 214 processor may also access the information provided by the messages for its operations.

In some examples, the communication processor 218 may include a digital signal processor and/or a controller which may direct such communication functionality of vehicle 100 according to various communication protocols associated with wired communication protocols, such as universal serial bus (USB) protocol for data communication etc., with various types of devices connected to a port coupled to the communication processor 218. In particular, in accordance with various aspects provided herein, the port may be configured to be coupled to a mobile communication device, such as a mobile phone or a smartphone to transfer data between the control system 200 and the mobile communication device.

The communication processor 218 may include a digital signal processor and/or a controller which may direct such communication functionality of vehicle 100 according to the communication protocols associated with one or more radio access networks, and may execute control over antenna system 106 and RF transceiver(s) 108 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness, the configuration of vehicle 100 shown in FIGS. 1 and 2 may depict only a single instance of such components.

Vehicle 100 may transmit and receive wireless signals with antenna system 106, which may be a single antenna or an antenna array that includes multiple antenna elements. Antenna system 202 may additionally include analog antenna combination and/or beamforming circuitry. In the receive (RX) path, RF transceiver(s) 108 may receive analog radio frequency signals from antenna system 106 and perform analog and digital RF front-end processing on the analog radio frequency signals to produce digital baseband samples (e.g., In-Phase/Quadrature (IQ) samples) to provide to communication processor 218. RF transceiver(s) 108 may include analog and digital reception components including amplifiers (e.g., Low Noise Amplifiers (LNAs)), filters, RF demodulators (e.g., RF IQ demodulators)), and analog-to-digital converters (ADCs), which RF transceiver(s) 108 may utilize to convert the received radio frequency signals to digital baseband samples. In the transmit (TX) path, RF transceiver(s) 108 may receive digital baseband samples from communication processor 218 and perform analog and digital RF front-end processing on the digital baseband samples to produce analog radio frequency signals to provide to antenna system 106 for wireless transmission. RF transceiver(s) 108 may thus include analog and digital transmission components including amplifiers (e.g., Power Amplifiers (PAs), filters, RF modulators (e.g., RF IQ modulators), and digital-to-analog converters (DACs), which RF transceiver(s) 108 may utilize to mix the digital baseband samples received from communication processor 218 and produce the analog radio frequency signals for wireless transmission by antenna system 106. Communication processor 218 may control the radio transmission and reception of RF transceiver(s) 108, including specifying the transmit and receive radio frequencies for operation of RF transceiver(s) 108.

Communication processor 218 may include a baseband modem configured to perform physical layer (PHY, Layer 1) transmission and reception processing to, in the transmit path, prepare outgoing transmit data provided by communication processor 218 for transmission via RF transceiver(s) 108, and, in the receive path, prepare incoming received data provided by RF transceiver(s) 108 for processing by communication processor 218. The baseband modem may include a digital signal processor and/or a controller. The digital signal processor may be configured to perform one or more of error detection, forward error correction encoding/decoding, channel coding, and interleaving, channel modulation/demodulation, physical channel mapping, radio measurement and search, frequency and time synchronization, antenna diversity processing, power control, and weighting, rate matching/de-matching, retransmission processing, interference cancelation, and any other physical layer processing functions. The digital signal processor may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components.

In some aspects, the digital signal processor may include one or more processors configured to retrieve and execute program code that defines control and processing logic for physical layer processing operations. In some aspects, the digital signal processor may execute processing functions with software via the execution of executable instructions. In some aspects, the digital signal processor may include one or more dedicated hardware circuits (e.g., ASICs, FPGAs, and other hardware) that are digitally configured to specific execute processing functions, where the one or more processors of digital signal processor may offload specific processing tasks to these dedicated hardware circuits, which are known as hardware accelerators. Exemplary hardware accelerators can include Fast Fourier Transform (FFT) circuits and encoder/decoder circuits. The digital signal processor's processor and hardware accelerator components may be realized as a coupled integrated circuit in some aspects.

RF transceiver(s) 108 may include separate RF circuitry sections dedicated to different respective radio communication technologies, and/or RF circuitry sections shared between multiple radio communication technologies. Antenna system 106 may include separate antennas dedicated to different respective radio communication technologies, and/or antennas shared between multiple radio communication technologies. Accordingly, antenna system 106, RF transceiver(s) 108, and communication processor 218 can encompass separate and/or shared components dedicated to multiple radio communication technologies.

Vehicle 100 may be configured to operate according to one or more radio communication technologies. The digital signal processor of the communication processor 218 may be responsible for lower-layer processing functions (e.g., Layer 1/PHY) of the radio communication technologies. In contrast, a controller of the communication processor 218 may be responsible for upper-layer protocol stack functions (e.g., Data Link Layer/Layer 2 and/or Network Layer/Layer 3). The controller may thus be responsible for controlling the radio communication components of vehicle 100 (antenna system 106, RF transceiver(s) 108, position device 114, etc.) in accordance with the communication protocols of each supported radio communication technology, and accordingly may represent the Access Stratum and Non-Access Stratum (NAS) (also encompassing Layer 2 and Layer 3) of each supported radio communication technology. The controller may be structurally embodied as a protocol processor configured to execute protocol stack software (retrieved from a controller memory) and subsequently control the radio communication components of vehicle 100 to transmit and receive communication signals in accordance with the corresponding protocol stack control logic defined in the protocol stack software. The controller may include one or more processors configured to retrieve and execute program code that defines the upper-layer protocol stack logic for one or more radio communication technologies, which can include Data Link Layer/Layer 2 and Network Layer/Layer 3 functions. The controller may be configured to perform both user-plane and control-plane functions to facilitate the transfer of application layer data to and from vehicle 100 according to the specific protocols of the supported radio communication technology. User-plane functions can include header compression and encapsulation, security, error checking and correction, channel multiplexing, scheduling, and priority, while control-plane functions may include setup and maintenance of radio bearers. The program code retrieved and executed by the controller of communication processor 218 may include executable instructions that define the logic of such functions.

In some aspects, vehicle 100 may be configured to transmit and receive data according to multiple radio communication technologies. Accordingly, in some aspects, one or more of antenna system 106, RF transceiver(s) 108, and communication processor 218 may include separate components or instances dedicated to different radio communication technologies and/or unified components that are shared between different radio communication technologies. For example, in some aspects, multiple controllers of communication processor 218 may be configured to execute multiple protocol stacks, each dedicated to a different radio communication technology and either at the same processor or different processors. In some aspects, multiple digital signal processors of communication processor 218 may include separate processors and/or hardware accelerators that are dedicated to different respective radio communication technologies, and/or one or more processors and/or hardware accelerators that are shared between multiple radio communication technologies. In some aspects, RF transceiver(s) 108 may include separate RF circuitry sections dedicated to different respective radio communication technologies, and/or RF circuitry sections shared between multiple radio communication technologies. In some aspects, antenna system 106 may include separate antennas dedicated to different respective radio communication technologies, and/or antennas shared between multiple radio communication technologies. Accordingly, antenna system 106, RF transceiver(s) 108, and communication processor 218 can encompass separate and/or shared components dedicated to multiple radio communication technologies.

Communication processor 218 may be configured to implement one or more vehicle-to-everything (V2X) communication protocols associated with how information is exchanged between vehicles, infrastructure, networks, pedestrians, and other devices. These protocols may include various rules, formats, and procedures for data transmission, ensuring interoperability and standardized communication. Protocols within C-V2X may include standards like IEEE 802.11p (for Dedicated Short-Range Communications, DSRC), Cellular-V2X (C-V2X) based on 3GPP standards (Release 14/15), and future developments aligned with 5G technologies.

In accordance with various aspects described herein, the communication processor 218 may obtain traffic-related information provided via V2X communication through various services enabled by these protocols. These services may be associated with practical applications and capabilities that result from the exchange of information among vehicles, infrastructure elements, networks, pedestrians, and other devices. Such services may facilitate an exchange of various types of traffic-related information, which the control system 200 may take as input and perform its control operations according to those traffic-related information elements.

Illustratively, such services may include vehicle-to-vehicle (V2V) services, in which the communication processor 218 may decode service information shared by other vehicles, which the information may include information about, each being an illustrative service information element: speed, location, direction, accident warnings, sudden braking warnings, road hazards, and further traffic-related information to enhance safety and traffic efficiency. The communication processor 218 may also encode similar self-service information to be sent to other vehicles.

Such services may further include vehicle-to-infrastructure (V2I) services, in which the communication processor 218 may decode service information shared by traffic infrastructure entities, such as, each being an illustrative service information element: traffic lights, signages, road sensors, etc., which the information may include information about road conditions, traffic congestions, upcoming obstacles, etc. The communication processor 218 may also encode similar self-service information to be sent to traffic infrastructure entities.

Such services may further include vehicle-to-pedestrian (V2P) services, in which the communication processor 218 may decode service information shared by mobile communication devices of pedestrians (e.g. mobile phones, smartphones, wearables, etc.), such as information, each being an illustrative service information element: about presence and location of the pedestrians. The communication processor 218 may also encode similar self-service information to be sent to pedestrian devices.

Such services may further include vehicle-to-network (V2N) services, in which the communication processor 218 may decode service information shared by network structures, such as servers, cloud services, etc. The information may include information about, each being an illustrative service information element: maps, road maps, traffic information, weather information, infotainment systems related information, software updates, and other cloud-based services, which may be used to improve navigation and driving experience of the vehicle.

Communication processor 218 may be configured to operate via a first RF transceiver of the one or more RF transceivers(s) 108 according to different desired radio communication protocols or standards. By way of example, communication processor 218 may be configured according to a Short-Range mobile radio communication standard such as, e.g., Bluetooth, Zigbee, and the like first RF transceiver may correspond to the corresponding Short-Range mobile radio communication standard. As another example, communication processor 218 may be configured to operate via a second RF transceiver of the one or more RF transceivers(s) 108 in accordance with a Medium or Wide Range mobile radio communication standard such as, e.g., a 3G (e.g., Universal Mobile Telecommunications System-UMTS), a 4G (e.g., Long Term Evolution-LTE), or a 5G mobile radio communication standard in accordance with corresponding 3GPP (3rd Generation Partnership Project) standards. As a further example, communication processor 218 may be configured to operate via a third RF transceiver of the one or more RF transceivers(s) 108 in accordance with a Wireless Local Area Network communication protocol or standard such as, e.g., in accordance with IEEE 802.11 (e.g., 802.11, 802.1 1a, 802.11b, 802.11g, 802.11n, 802.11p, 802.11-12, 802.11ac, 802.11ad, 802.11ah, and the like). The one or more RF transceiver(s) 108 may be configured to transmit signals via antenna system 106 over an air interface. The RF transceivers 108 may each have a corresponding antenna element of antenna system 106, or may share an antenna element of the antenna system 106.

Memory 104 may embody a memory component of vehicle 100, such as a hard drive or another such permanent memory device. Although not explicitly depicted in FIGs. 1 and 2, the various other components of vehicle 100, e.g. one or more processors 102, shown in FIGs. 1 and 2 may additionally each include integrated permanent and non-permanent memory components, such as for storing software program code, buffering data, etc.

The antenna system 106 may include a single antenna or multiple antennas. Each of the one or more antennas of antenna system 106 may be placed at a plurality of locations on the vehicle 100 in order to ensure maximum RF coverage. The antennas may include a phased antenna array, a switch-beam antenna array with multiple antenna elements, etc. Antenna system 106 may be configured to operate according to analog and/or digital beamforming schemes in order to maximize signal gains and/or provide levels of information privacy. Antenna system 106 may include separate antennas dedicated to different respective radio communication technologies, and/or antennas shared between multiple radio communication technologies.

While shown as a single element in FIG. 1, antenna system 106 may include a plurality of antenna elements (e.g., multiple antenna arrays) positioned at different locations on vehicle 100. The placement of the plurality of antenna elements may be strategically chosen in order to ensure a desired degree of RF coverage. For example, additional antennas may be placed at the front, back, corner(s), and/or on the side(s) of the vehicle 100.

Data acquisition devices 112 may include any number of data acquisition devices and components, including sensors, depending on the requirements of a particular application. This may include force sensors, load cells, image acquisition devices, proximity detectors, acoustic sensors, pressure sensors, fingerprint sensors, motion detectors, etc., for providing data about the interior of the vehicle or the vehicle's environment. Image acquisition devices may include cameras (e.g., multimodal cameras, standard cameras, digital cameras, video cameras, single-lens reflex cameras, infrared cameras, stereo cameras, depth cameras, RGB cameras, depth cameras, etc.), charge coupling devices (CCDs), or any type of image sensor. Proximity detectors may include radar sensors, light detection and ranging (LIDAR) sensors, mmWave radar sensors, etc. Acoustic sensors may include microphones, sonar sensors, ultrasonic sensors, etc. Furthermore, the data acquisition devices may include the sensors coupled to the mobility system 120, such as the accelerometers, inertial measurement unit (IMU) sensors.

Accordingly, each of the data acquisition units may be configured to observe a particular type of data of an occupant of the vehicle 100 or the vehicle's 100 environment and forward the data to the data acquisition processor 214 in order to provide the vehicle with an accurate portrayal of the interior of the vehicle 100 or vehicle's 100 environment. The data acquisition devices 112 may be configured to implement pre-processed sensor data, such as radar target lists or LIDAR target lists, in conjunction with acquired data.

Measurement devices 116 may include other devices for measuring vehicle-state parameters, such as a velocity sensor (e.g., a speedometer) for measuring a velocity of the vehicle 100, one or more accelerometers (either single axis or multi-axis) for measuring accelerations of the vehicle 100 along one or more axes, a gyroscope for measuring orientation and/or angular velocity, odometers, altimeters, thermometers, etc. It is appreciated that vehicle 100 may have different measurement devices 116 depending on the type of vehicle it is, e.g., car vs. drone vs. boat.

Position devices 114 may include components for determining a position of the vehicle 100. For example, this may include GPS or other GNSS circuitry configured to receive signals from a satellite system and determine a position of the vehicle 100. Position devices 114, accordingly, may provide vehicle 100 with satellite navigation features. The one or more position devices 114 may include components (e.g., hardware and/or software) for determining the position of vehicle 100 by other means, e.g. by using triangulation and/or proximity to other devices such as NIEs.

The one or more memories 104 may store data, e.g., in a database or in any different format, that may correspond to a map. For example, the map may indicate a location of known landmarks, roads, paths, network infrastructure elements, or other elements of the vehicle's 100 environment. The one or more processors 102 may process sensory information (sensor data including information such as force measurements, images, sensor readings, radar signals, depth information from LIDAR, or stereo processing of two or more images) of the environment of the vehicle 100 together with position information, such as GPS coordinates, a vehicle's ego-motion, etc., to determine a current location of the vehicle 100 relative to the known landmarks, and refine the determination of the vehicle's location. Certain aspects of this technology may be included in a localization technology such as a mapping and routing model.

The map database (DB) 204 may include any type of database storing (digital) map data for the vehicle 100, e.g., for the control system 200 . The map database 204 may include data relating to the position, in a reference coordinate system, of various items, including roads, water features, geographic features, businesses, points of interest, restaurants, gas stations, etc. The map database 204 may store the locations of such items and descriptors relating to those items, including, for example, names associated with any of the stored features. In some aspects, a processor of the one or more processors 102 may download information from the map database 204 over a wired or wireless data connection to a communication network (e.g., over a cellular network and/or the Internet, etc.). In some cases, the map database 204 may store a sparse data model including polynomial representations of certain road features (e.g., lane markings) or target trajectories for the vehicle 100 . The map database 204 may also include stored representations of various recognized landmarks that may be provided to determine or update a known position of the vehicle 100 with respect to a target trajectory. The landmark representations may include data fields such as landmark type, landmark location, among other potential identifiers.

Furthermore, the control system 200 may include a driving model, e.g., implemented in an advanced driving assistance system (ADAS) and/or a driving assistance and automated driving system. By way of example, the control system 200 may include (e.g., as part of the driving model) a computer implementation of a formal model such as a safety driving model. A safety driving model may be or include a mathematical model formalizing an interpretation of applicable laws, standards, policies, etc. that are applicable to self-driving vehicles. A safety driving model may be designed to achieve, e.g., three goals: first, the interpretation of the law should be sound in the sense that it complies with how humans interpret the law; second, the interpretation should lead to a useful driving policy, meaning it will lead to an agile driving policy rather than an overly-defensive driving which inevitably would confuse other human drivers and will block traffic and in turn limit the scalability of system deployment; and third, the interpretation should be efficiently verifiable in the sense that it can be rigorously proven that the self-driving (autonomous) vehicle correctly implements the interpretation of the law. A safety driving model, illustratively, may be or include a mathematical model for safety assurance that enables identification and performance of proper responses to dangerous situations such that self-perpetrated accidents can be avoided.

As described above, the vehicle 100 may include the control system 200 as also described with reference to FIG. 2. The vehicle 100 may include the one or more processors 102 integrated with or separate from an engine control unit (ECU) which may be included in the mobility system 120 of the vehicle 100. The control system 200 may, in general, generate data to control or assist to control the ECU and/or other components of the vehicle 100 to directly or indirectly control the movement of the vehicle 100 via mobility system 120. The one or more processors 102 of the vehicle 100 may be configured to perform as described herein.

In accordance with various aspects described herein, the vehicle 100 may include a carrier structure. The carrier structure may be any type of structure that suitable for a vehicle to carry a load. In some examples, the load may be an object that is external to the vehicle 100, such as a package, a pallet, a box, etc. that has no integrated portion to the vehicle 100. In some examples, the load may be an internal and/or integrated object to the vehicle 100, such as a particular volume including one or more components of the vehicle 100. The carrier structure may include a load-bearing platform. The load-bearing platform may be equipped with multiple force sensors positioned at predetermined coordinates. In some examples, each force sensor may be configured for multi-axis measurements for detection of forces in longitudinal, vertical, and traverse directions. The force sensors may generate electrical signals corresponding to the measured forces, which the one or more processors 102 of the vehicle 100 may process the measurements to determine the load's center of gravity.

The components illustrated in FIGS. 1 and 2 may be operatively connected to one another via any appropriate interfaces. Furthermore, it is appreciated that not all the connections between the components are explicitly shown, and other interfaces between components may be covered within the scope of this disclosure.

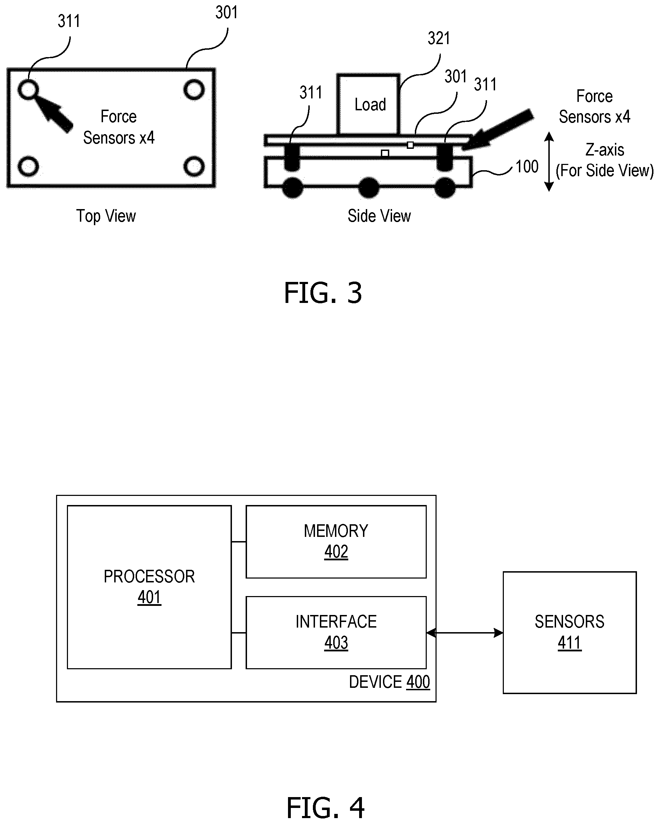

FIG. 3 illustrates an illustration of a vehicle in accordance with various aspects described herein. In this illustration, the vehicle (e.g. the vehicle 100) includes a carrier structure 301 and force sensors 311, which may be employed in determining the three-dimensional center of gravity (COG) of a load represented to be carried by the vehicle 100.

The carrier structure 301, serving as a load-bearing platform, may be configured to support a load 321 securely during movement. Illustratively, the load-bearing platform may include a flat surface designed to accommodate loads of various shapes and sizes. The load-bearing platform may be arranged, such that the weight of the load 321 is evenly distributed. The carrier structure 301 may form a part of the overall vehicle 100 and may be mechanically linked to the vehicle's chassis. Illustratively, the carrier structure 301 may move in synchronization with the vehicle 100 during the operation of the vehicle 100.

The vehicle may include a number of force 311 sensors to measure forces applied (i.e. exerted) on them by the load 321. The force sensors 311 may measure forces applied on at least one axis that is the axis along which gravitational forces are to be present in accordance with the configuration of the carrier structure 301 (e.g. placement of load 321 within the carrier structure) and the vehicle 100 (e.g. direction of movement, placement of the carrier structure, etc.). In some examples, the force sensors 311 may measure forces applied on at least two axes, or three axes of a three dimensional space, each axis being perpendicular to others. Illustratively, there are four force sensors 311 positioned on the carrier structure 301, as shown in both the top and side views. In an example, the force sensors 311 may be load cells configured to measure forces exerted on them by the load 321. Each force sensor 311 may convert the mechanical force it experiences, some of which may include gravitational force, into an electrical signal that represents the magnitude and direction of the force. The force sensors 301 may be situated at known and predefined coordinates on the carrier structure 301, and configured to reflect the load distribution across the platform.

The load 321, which may be positioned atop the carrier structure 301, may be any object or package that the vehicle 100 is designed to transport. Properties of the load, including weight, size, and height, may vary, which may influence the distribution of forces detected by the sensors 311. In scenarios involving dynamic loads, such as shifting cargo or irregularly shaped objects, the configuration illustrated may allow for continuous monitoring of the forces acting on the carrier structure 301.

From the side view depicted in the image, the force sensors 311 may be positioned not only to measure the planar (X and Y axes) distribution of weight but also to provide data that may be used to calculate the vertical (Z-axis) position of the COG as described herein. In accordance with various aspects described herein, the force sensors 311, which may be evenly or unevenly distributed across the carrier structure 301, may detect variations in force during controlled vehicle accelerations or decelerations. By applying principles of mechanics, such as Newton's second law (Force = mass $\times$ acceleration), a processor of the vehicle (e.g. the one or more processors 102) may compute the Z-axis COG based on the differences in forces measured by the sensors during motion.

Illustratively, as the vehicle 100 accelerates, decelerates, or changes direction, the load 321 may exert varying forces on the force sensors 311 depending on the weight distribution and height of the load. The force sensors 311 may capture these variations and indicate as electrical signals (i.e. a change of electrical signals, e.g. as sensor data), which may then be transmitted to a control system of the vehicle (e.g. control system 200) for processing. The one or more processors of the vehicle 100 may process the electrical signals to calculate the three-dimensional COG of the load 321. In some examples, the one or more processor may further determine whether the load 321 remains within safe operational parameters based on this processing. This capability may be especially relevant in AMRs and AGVs, where human intervention is minimized, and the vehicle 100 may autonomously determine the stability and safety of its load 321. By continuously monitoring the COG, the vehicle 100 may prevent scenarios that could lead to tipping, compromised braking performance, or unstable movement.

FIG. 4 shows an illustrative example of device 400 for the vehicle 100 schematically, in accordance with various aspects of the disclosure. The device 400 may include a processor 401 (e.g. the one or more processors 102, the communication processor 218, the application processor 216, the data acquisition processor 214), a memory 402 (e.g. the memory 104), and an interface 403. The interface 403 may include any component configured to perform a communication operation to at least receive signals sent by sensors 411. The sensors 411 may include force sensors (e.g. the force sensors 311). Illustratively, the interface may include a radio communication circuit (e.g. the RF transceiver 108) or an internal communication bus, which may communicatively couple the sensors 411 with the processor 401. The device 400 may obtain signals, which may be referred to as sensor data, sent by the sensors 411.

Illustratively, the interface 403 may couple the device 400 communicatively to the sensors 411 via an established connection between the device 400 and the sensors 411. In some examples, the established connection may be a wireless connection, and the interface 403 may be one of the communication interfaces as described above including an RF transceiver 108, the antenna system 106. In some examples, the established connection may be a wired connection, and the interface 404 may include a port configured to couple the sensors 411 via a cable. For example, the wired connection may include a USB connection, or any other connection that is fit to couple the sensors 411 to the device 400 communicatively for exchange of information.

The processor 401 may include one or more processing means. In various examples, the processor 401 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 401 may be implemented in one processing unit, e.g. a system on chip (SOC), or a processor. In some examples the processor 401 may include one or more cores as computation units, an arithmetic logic unit, a control unit, a storage unit, a plurality of registers. In some examples, the mobile communication device may provide information to the memory 402 that is accessible by the processor 401.

As described herein, the sensors 411 may include force sensors 411 configured to to measure forces applied (i.e. exerted) on them by a load (e.g. the load 321). Although the load has been illustrated as a single unit, the load may include multiple units, pieces, particles, and can be of any shape. Illustratively, a carrier structure (e.g. the carrier structure 301) of the vehicle 100 may be configured to carry the load and the force sensors 411 may measure forces applied on at least one axis that is the axis along which gravitational forces are to be present in accordance with the configuration of the carrier structure. This axis may be referred to as Z-axis herein. In some examples, the force sensors 411 may measure forces applied further on X axis and/or Y axis as well, each axis being perpendicular to others. In an example, the force sensors 411 may be load cells configured to measure forces exerted on them by the load.

In an example, the interface 403 may be configured to receive sensor data representing force measurements along at least a first axis (Z-axis) of the vehicle from at least two sensors 411. The interface 403 may facilitate communication between the sensors and the processor 401 and may enable the device 400 to acquire information representing force measurements real-time force measurements, which may be referred to herein as sensor data.

The processor 401 may determine the positions of the at least two sensors 411 along a second axis and a third axis, wherein the second axis and the third axis are perpendicular to the first axis. The first axis being referred to as Z-axis, the second and third axes may be referred to as X and Y axes. Correspondingly, the processor 401 may use the spatial arrangement of the sensors indicated by their positions as part of the calculation of the load's COG. The X and Y axes may correspond to horizontal directions relative to the vertical direction of Z-axis, the sensor positions may be defined at X-Y axes, which may also correspond to vehicle's movement at horizontal direction. In some examples, the determined positions may include relative positions (e.g. one force sensor being taken as the origin). In some examples, certain axis or axes of the sensor positions may be taken as zero. In an example, the processor 401 may determine the positions of the at least two sensors 411 based on sensor position data stored in the memory 402 (e.g. information indicating predefined or predetermined positions of the at least two sensors). In some examples, the processor 401 may dynamically detect or determine the sensor positions through calibration or user input.

In an example, the processor 401 may instruct a vehicle control system (e.g. the control system 200) to move (i.e. control) the vehicle with an acceleration for a period of time. This acceleration may facilitate conditions necessary to determine the COG along the first axis, which may correspond to the vertical axis. By applying a known acceleration to the vehicle 100, the device 400 may enable the force sensors 411 to detect changes in force distribution resulting from the load's inertia. The processor 401 may issue these instructions through a communication interface connected to the vehicle control system. The acceleration may be predefined or calculated based on operational characteristics of the vehicle, such as its maximum speed, load capacity, or surface friction. Illustratively, the processor 401 may determine the acceleration based on the operational characteristics of the vehicle and instruct the vehicle control system to accelerate the vehicle with the determined acceleration.

In an example, the acceleration determined by the processor 401 may be a fixed, predefined value stored in the memory 402. The direction of the acceleration may also be predefined or the processor 401 may determine the direction of the acceleration dynamically. For example, the acceleration direction may align with the primary direction of travel, such as a straight movement without steering adjustments, with the steering set to zero degrees. Alternatively, the processor 401 may determine the acceleration direction based on data exchanged with the vehicle control system. This data exchange may include information about the surrounding environment, such as objects or obstacles. Correspondingly, the processor 401 may generate a route consisting of multiple directional changes over the defined period of time based on the information about the surrounding environment. By leveraging this contextual information, the processor 401 may determine the acceleration, such that the applied acceleration aligns with the operational requirements of the vehicle and the specific characteristics of the load being transported.

The processor 401 may determine a center of gravity location along the Z-axis for a load applying force to the at least two sensors 411. This determination may involve the use of sensor positions, sensor data representing the force measurements during the period of time, and the applied acceleration. The processor 401 may use computational methods, such as solving equations derived from Newtonian mechanics, to calculate the COG. The data from the sensors 411 may include electrical signals proportional to the measured forces (sensor data), which the processor 401 may process into numerical values suitable for computation. In some examples, the sensor data received from the sensors 411 may include the numerical values suitable for computation.

In an example, determining the center of gravity along the first axis may be facilitated by combining sensor data from multiple sensors 411. Each sensor may measure forces exerted by the load and transmit these as respective sensor data to the processor 401. The memory 402 may store the equations required to compute the COG, as well as the sensor positions relative to the load-bearing platform. In some examples, the processor 401 may perform the determination of the COG location along the first axis in a continuous manner. For example, the processor 401 may continuously receive sensor data (e.g. real-time sensor data) from the interface 403, and perform computation of the COG location to account for dynamic changes in force during the period of acceleration. Additionally, the processor 401 may utilize predefined parameters stored in the memory 402, such as calibration data or thresholds for acceptable COG values, to ensure that the results are meaningful for stability analysis.

The processor 401 may further determine a center of gravity location along at least one of or both of the second axis and the third axis based on the sensor positions and the sensor data. This determination may complement the COG calculation along the first axis to provide a comprehensive three-dimensional representation of the load's stability. The forces measured by the sensors 411 may reflect weight distribution across the load-bearing platform, which the processor 401 may use to calculate the horizontal COG components.

The acceleration for the period of time during which measurements are taken may be predefined or determined dynamically based on the operational characteristics of the vehicle. For example, the processor 401 may access vehicle parameters stored in the memory 402, such as maximum acceleration rates or load limits, to calculate a safe yet effective acceleration profile. The processor 401 may instruct the vehicle control system to apply this acceleration in a direction along the X axis, perpendicular to the primary gravitational force, to induce measurable inertial forces on the load. In an example, the processor 401 may calculate the mass of the load based on a total force measured along the first axis by summing the sensor data from the at least two sensors and applying a gravitational constant. This calculation may provide an additional parameter for assessing load stability, as the mass and COG location together define the dynamic behavior of the load during motion.

The processor 401 may further determine whether the determined COG location satisfies one or more safety thresholds. In an example, these thresholds may be stored in the memory 402 and may represent limits beyond which the load is considered unstable. If the COG location exceeds these thresholds, the processor 401 may instruct the vehicle control system to perform safety actions, such as reducing speed, altering the load configuration, or stopping the vehicle entirely. These actions may prevent tipping or other stability-related hazards. In some examples, one or more safety thresholds may further be associated with the COG of the vehicle as well.

The processor 401 may determine the center of gravity (COG) location along the second axis (X-axis) and the third axis (Y-axis) based on the sensor positions and the sensor data. This determination may especially performed together with the computation of the COG along the first axis (Z-axis) to enable a full three-dimensional representation of the load's COG. The processor 401 may use the positions of the sensors 411, which may be predefined or dynamically detected, to calculate the load distribution in the horizontal plane. For example, the processor 401 may retrieve the predefined positions of the sensors from the memory 402 or calibrate these positions using initial measurements. The processor 401 may analyze the sensor data representing force measurements from the sensors to determine the distribution of weight across the X-Y axes. In an example, the processor 401 may instruct the vehicle control system based on the distribution of weights indicated by the sensor data to change a parameter (e.g. velocity, spin, movement direction) associated with a movement of the vehicle to ensure that load or loads remain evenly distributed during transport, preventing lateral instability or uneven wear on the vehicle's components.

In an example, the acceleration for the period of time during which force measurements are taken (e.g. the force measurements that are to be used to determine the COG along the first axis) may be predefined. In an example, the processor 401 may determine the acceleration dynamically based on operational characteristics of the vehicle. Illustratively the operational characteristics may include a current acceleration of the vehicle, a task assigned to a vehicle for its performance, etc. The processor 401 may select a predefined acceleration value stored in the memory 402 or calculate an acceleration that is based on parameters such as load mass, vehicle speed, or surface conditions associated with the vehicle.

For example, the processor 401 may analyze data from additional sensors or inputs, such as vehicle encoders, to determine the acceleration. In an example, the determined acceleration may be an acceleration that the processor 401 estimates to minimize risk while maximizing accuracy of the force measurements. For example, in a vehicle operating on a slippery surface, the processor 401 may adjust the acceleration used to determine the center of gravity to prevent slipping while still generating sufficient inertial forces for COG computation.

The acceleration may be determined based on information received from at least one of motor encoders, wheel encoders, or further sensors configured to measure acceleration. For example, the processor 401 may use input from motor encoders to identify the vehicle's current speed and adjust acceleration accordingly. Similarly, wheel encoders may provide data on wheel slippage or rotational speed, based on which the processor 401 may calculate an acceleration that accounts for traction conditions. In a scenario of an involving uneven terrain, additional sensors such as gyroscopes or accelerometers may provide supplementary data to refine the acceleration according to the operational characteristics in such a terrain.

The processor 401 may determine a result representing whether the COG location along the Z-axis satisfies one or more safety thresholds. Based on this determination, the processor 401 may instruct the vehicle control system to perform a safety action. These thresholds may be stored in the memory 402 and may indicate estimated operational limits to ensure load stability. In some examples, the processor 401 may obtain the one or more safety thresholds from the vehicle control system.

For example, if the COG location along the Z-axis is determined to exceed a first threshold (e.g. a COG location threshold along the Z-axis), the processor 401 may instruct the vehicle control system to perform an action to improve safety. For example, the action may include to reduce vehicle speed. The action may include adjust a previously determined braking distance of the vehicle, by which the vehicle control system instructs the vehicle to brake when an obstacle is detected within the braking distance. If the COG along the Z-axis exceeds a second, more critical, threshold (e.g. which is above the first threshold), the processor 401 may instruct the vehicle control system to perform a further action that is more movement restrictive than the first action. For example, the further action may include halting the vehicle entirely, and/or preventing movement of the vehicle to prevent tipping. In some examples, the processor 401 may cause the vehicle to perform the action and/or the further action.

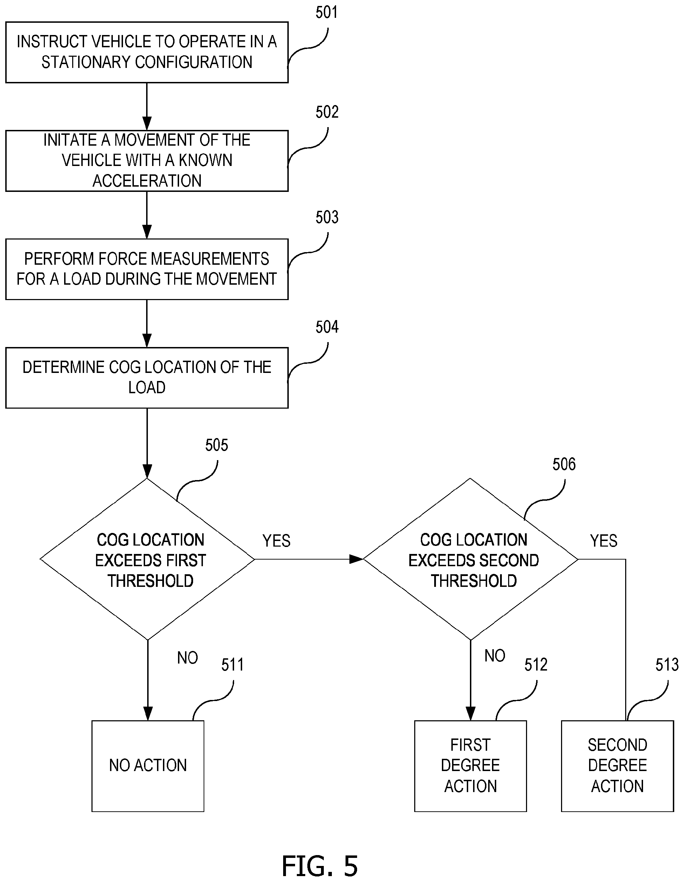

FIG. 5 shows an example of a flow diagram in accordance with aspects described herein. A processor (e.g. the processor 401) may implement aspects described herein for the flow diagram, unless indicated otherwise. The flow diagram may outline a sequence of operations for determination of a three-dimensional COG of a load on the vehicle and taking appropriate safety actions based on threshold evaluations. It is to be noted herein that the flow diagram has been illustrated to describe overall aspects and each portion of the operations described herein may be optional.

In 501, the processor 401 may instruct the vehicle to operate in a stationary configuration. In an example, the processor 401 may instruct the vehicle control system to cause the vehicle to operate in a stationary configuration at least for a first period of time. In the first period of time, the vehicle may not move or initiate any movement. At this stage, the processor 401 may collect baseline sensor data without the influence of motion of the vehicle. For example, baseline sensor data may include force measurements of the force sensors 411. The processor 401 may determine the positions of the sensors 411 along the X and Y axes while the vehicle is stationary. The processor 401 may further determine the COG location along X and Y axes at this stage. In some examples, the stationary configuration may also allow the processor 401 to verify that the force sensors 411 are properly aligned and operational before initiating movement, ensuring the integrity of subsequent calculations.

In 502, the processor 401 may initiate a movement of the vehicle with a known acceleration. The processor 401 may instruct the vehicle to control (e.g. to move) with a predefined or dynamically determined acceleration. In the example of dynamically determined acceleration, the processor 401 may further instruct the memory 402 to store the dynamically determined acceleration or accelerations. The processor 401 may further determine the direction of acceleration in a manner that it is aligned with the X or Y axis to optimize the measurement of horizontal COG components.

In 503, the processor 401 may instruct the force sensors 411 to perform force measurements during the a second period of time in which the vehicle moves with the acceleration. The processor 401 may instruct the memory 402 to store information representing force measurements (e.g. measured force values) received from the force sensors 411. In an example, the processor 401 may further instruct the memory 402 to store obtained acceleration information from accelerations or velocity sensors of the vehicle. All force measurements may be mapped to one or more measured acceleration values representing the acceleration of the vehicle. Illustratively, the sensors 411 may measure forces exerted by the load along at least the Z-axis. These force measurements, transmitted to the processor 401 via the interface 403, may serve as the input for COG calculations. For example, the force sensors 411 may continuously send data (e.g. real-time data) representing the forces applied by the load on the carrier structure. The processor 401 may aggregate this data over the period of acceleration to account for dynamic variations caused by the inertia of the load.

In 504, the processor 401 may determine the COG location of the load at least along the Z-axis. The processor 401 may obtained stored COG location data along X and Y axes (e.g. stored during 501). Additionally, or alternatively, the processor 401 may determine three dimensional COG location in 504 based on the force measurements, the sensor positions, and acceleration data. The processor 401 may calculate the COG location of the load along the Z-axis. The calculation may include solving equations derived from Newtonian mechanics to determine the vertical position of the COG relative to the carrier structure.

In 505, the processor 401 may evaluate if COG location exceeds first threshold. It is to be understood that this evaluation includes an evaluation along at least the Z-axis (e.g. COG-height). The thresholds described herein may include a distance or a location relative to a spatial point (e.g. ground, the plane defined by the carrier structure along X and Y axes, one of the force sensors, etc.), which is comparable with the COG location. Once the COG location is determined, the processor 401 may evaluate whether the COG location along at least Z-axis exceeds a predefined first threshold stored in the memory 402. This threshold may represent an acceptable limit for safe operation, beyond which corrective actions may be necessary. If the COG location does not exceed the first threshold, the processor 401 determines that no corrective actions are necessary in 511, and the vehicle may continue normal operation. For example, if the COG location exceeds the first threshold, the processor 401 may instruct the vehicle control system to reduce the vehicle's speed or adjust its braking distance to mitigate potential instability.

In one example, the processor 401 may further evaluate if the COG location exceeds a second threshold. For example, if the COG location exceeds the first threshold, the processor 401 may proceed to 506 in which the processor 401 may evaluate whether the COG location also exceeds a second, more critical, threshold. This threshold may represent a point at which the load is considered highly unstable, requiring immediate intervention. For example, if the second threshold is exceeded, the processor 401 may instruct the vehicle control system to halt movement entirely to prevent tipping or other safety hazards. The processor 401 may also generate an alert to notify the critical condition. If the COG location exceeds the first threshold but not the second, the processor 401 may implement a first degree action in 512 to maintain stability. This action may include reducing the vehicle's speed, adjusting its braking distance, or altering its acceleration profile. If the COG location exceeds the second threshold, the processor 401 may implement a second degree action, that is more restrictive of the movement of vehicle than the first degree action. This action may include halting the vehicle entirely, preventing further movement, and notifying of the unsafe condition.

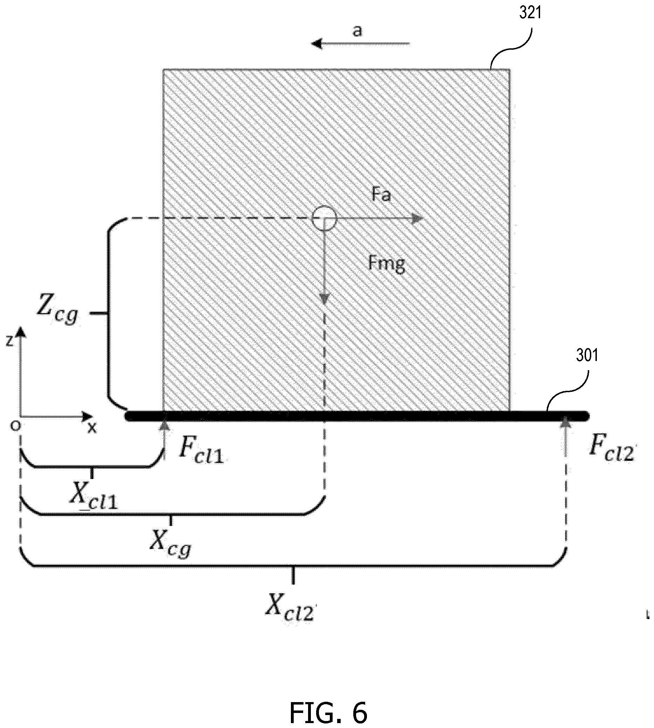

FIG. 6 illustrates an example of a carrier structure to carry a load. The carrier structure and the load 321 depicted herein may correspond to aspects described in accordance with FIG. 3. Illustratively, two force sensors (e.g. load cells) may be disposed under the carrier structure 321 in a manner to measure forces at the vertical axis (corresponding to Z-axis described herein) for measuring the forces applied by the weight of the load 321. These two force sensors measuring forces $F_{cl1}$ and $F_{cl2}$ are positioned at known distances $X_{cl1}$ and $X_{cl2}$, respectively, from a point of origin o.

Illustratively, the distances $X_{cl1}$ and $X_{cl2}$ may be based on the sensor positions described above. For example, the processor 401 may calculate these distances according to the received sensor positions in a manner that they correspond to distances from the point of origin o. The point of origin may correspond to an origin of a reference coordinate system that the processor 401 uses for aspects described herein. In some examples, the point of origin may correspond to a predetermined spatial position of the vehicle, such as the position of one of the sensors 311, a location of the carrier structure 301 (e.g. a center of the carrier structure along X and Y axes) or a point on a plane defined by the carrier structure along X and Y axes.

The illustrated example may further illustrate the essential forces acting on the system, including the gravitational force $F_{mg}$, the inertial force due to acceleration $F_a$, and their relationship to the COG. In an example, the processor 401 may calculate the COG location along the Z-axis (e.g. height of the COG or vertical location of the COG) denoted as $Z_{cg}$ and the COG location along the X and Y axes (e.g. lateral position or horizontal location of the COG) $X_{cg}$ based on measurements from the force sensors, $F_{cl1}$ and $F_{cl2}$, and the known acceleration a. These calculations may rely on Newtonian mechanics and may involve solving a series of equations that relate the measured forces, sensor positions, and acceleration to the load's characteristics.

For example, the processor 401 may calculate the gravitational force acting on the load 321. The processor may calculate the gravitational force based on the following formula, where M represents the mass of the load and g represents a defined gravitational constant:

$$F_{mg} = F_{cl1} + F_{cl2} = M \cdot g \qquad (1)$$

Further, the processor 401 may calculate the COG location according to the following equation with respect to the inertial force due to the known acceleration of the vehicle:

$$F_a = M \cdot a \qquad (2)$$

These two forces may form the basis for determining the COG location using the relationships between the applied forces and the measured forces at the sensors.

The processor 401 may calculate the COG location along the X and Y axes. In an example, the processor 401 may instruct the vehicle to operate in a stationary configuration or may receive an indication representing that the vehicle is stationary. With the assumption that there are two sensors disposed along the X axis, and the load 321 is also stationary, the equation 2 may result in:

$$F_{cl1} \times X_{cl1} + F_{cl2} \times X_{cl2} - F_{mg} \times X_{cg} - F_a \cdot Z_{cg} = 0 \qquad (3)$$

While the vehicle is stationary, or in any way other way that the acceleration is zero, the processor 401 may calculate the COG location along the X and Y axes, by substituting $F_a = 0$ in the equation 3 for the load 321.

$$X_{cg} = \frac{F_{cl1} \times X_{cl1} + F_{cl2} \times X_{cl2}}{F_{mg}} \qquad (4)$$

This equation 4 illustrates how the processor 401 may calculate the lateral position of the load's COG based on the measured forces by the sensors and the known positions of the sensors relative to the origin.

Furthermore, once the processor 401 instructs to move the vehicle with a known acceleration, and the vehicle moves with the known acceleration "a", the processor 401 may determine the COG location along the Z-axis (e.g. the height of the COG $Z_{cg}$). The force balance equation in this case includes the inertial force, and may be expressed as in the equation 3, which results in the following equation for $Z_{cg}$:

$$Z_{cg} = \frac{F_{cl1} \times X_{cl1} + F_{cl2} \times X_{cl2} - F_{mg} \times X_{cg}}{(F_{cl1} + F_{cl2})a} \qquad (5)$$

According to this equation the processor 401 may perform the determination of the COG height (the COG location along the Z-axis) based on force measurements, sensor positions, the total force due to gravity, and the applied acceleration.

In an example, aspects described herein may extend these calculations to vehicles equipped with more than two sensors. For a general case involving n sensors, the height of the COG ($Z_{cg}$) may be calculated as the following, in which $F_i$ represents the force measured by the i-th sensor, $X_i$ represents the position of the i-th sensor relative to the origin of the reference coordinate system:

$$Z_{cg} = \frac{\sum_i F_i \times X_{i_{cl1}} - F_{mg} \times X_{cg}}{\sum_i F_i a} \qquad (6)$$

Correspondingly, in an example, the processor 401 may determine the COG location along the X and Y axes based on sensor data collected when the vehicle is stationary, illustratively as described above. It is to be noted that the position along the Y-axis can also be determined by extending the equation to include sensor coordinates in the Y-dimension. These calculations may provide a two-dimensional representation of the COG, enabling precise load balancing.

In an example, the processor 401 may calculate the vertical position of the COG $Z_{cg}$ while the vehicle moves with a predefined acceleration. In some examples, the acceleration may be varying during the period of time in which force measurements are used to determine the vertical position of the COG. In such an example, the processor 401 may perform calculations for different acceleration values with force measurements corresponding to those acceleration values (i.e. each set of force measurements and each acceleration value corresponding to measurements of the same instance) and combine those calculations to obtain $Z_{cg}$. In an example, the processor 401 may direct the vehicle to accelerate along only one of the horizontal axes, illustratively only along the second axis (X-axis) or the third axis (Y-axis). This lateral acceleration may induce measurable inertial forces, to enable the calculation of horizontal COG components in a less complex manner.

The processor 401 may calculate the COG location along the Z-axis during a predefined period of motion. This operation may include dynamic force measurements to account for the inertial effects introduced by the acceleration a as described above. The force sensors may continuously transmit data, which is received and processed by the processor 401 for real-time computations.

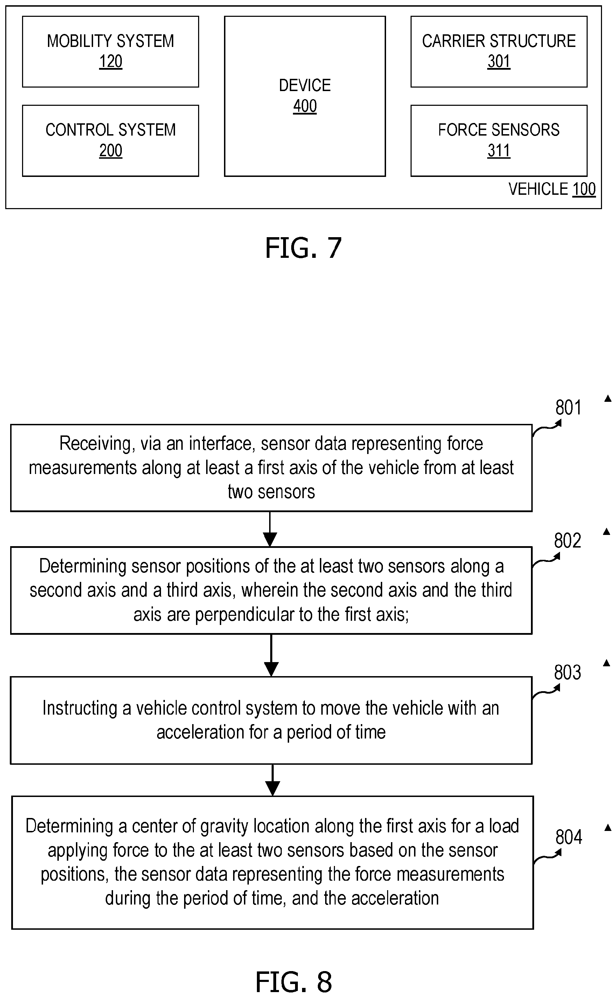

FIG. 7 shows an schematic illustration of a vehicle. Illustrative the vehicle corresponds to the vehicle 100 described herein. The vehicle 100 includes the mobility system 120, the control system 200, the device 400, the carrier structure 301, and the force sensors 311. In one example, the control system 200 may include the force sensors 311. Each force sensor 311 may correspond to a data acquisition device 112 or a measurement sensor 116 as described herein. In other words, the control system 200 may include the force sensors. Similarly, the control system 200 may further include the device 400. Illustratively, the processor 401 may be one or more processors 102 of the control system 200. In a further example, the mobility system 120 may include the carrier structure 301.

The vehicle 100 may dynamically monitor and determine the three-dimensional center of gravity for loads during movement as described herein. Each component may contribute to the vehicle's ability to ensure operational safety and stability by calculating and responding to load-based dynamics. The mobility system 120 may facilitate the movement of the vehicle 100 and may include elements such as wheels, axles, propulsion mechanisms, and control components tailored to the vehicle's specific type (e.g., ground-based, aerial, or aquatic) as described herein. In this embodiment, the mobility system 120 may operate in coordination with other systems to manage acceleration, deceleration, and stability during COG measurements.

The control system 200 may include the processing capabilities required to calculate and monitor the COG of loads. It may include the processor 401, which executes computations based on data collected from the force sensors 311. Additionally, the control system 200 may include integrated subsystems, such as a data acquisition interface and force transducers, enabling seamless communication with the mobility system 120 and the carrier structure 301 as described herein. The processor 401 may communicate with force sensors 311 via the interface 403 and use sensor data to determine force distributions caused by the load 321. By leveraging this information, the processor 401 may calculate the load's COG in three dimensions (X, Y, and Z axes).

The carrier structure 301 may serve as the load-bearing platform, to securely accommodate loads of varying sizes and shapes. The carrier structure 301 may be mechanically linked to the vehicle's chassis or housing and it may be configured to maintain the stability of the load 321 during movement. The force sensors 311 may be placed beneath the carrier structure 321 to measure forces exerted along the Z-axis and to monitor the load's distribution along the X and Y axes. The force sensors 311 may be load cells capable of detecting forces applied by the load 321. They may be positioned beneath the carrier structure 301 at specific locations to provide real-time data on load-induced forces. These sensors may enable the processor 401 to dynamically compute the COG and adapt the vehicle's operational parameters accordingly. They may be arranged at distinct positions along the X and Y axes to measure force distributions caused by the load 321.

The processor 401 may may issue commands to the mobility system 120 to adjust acceleration, velocity, or braking and to the control system 200 (or other components of the control system 200) to cause force measurements, receive information about force measurements, obtain information about sensor positions, etc. For instance, if the COG height (Z-axis value) exceeds a threshold, the control system 200 may limit the vehicle's velocity to ensure stability.

In an example, the processor 401 may continuously monitor the COG by calculating multiple COG values during the vehicle's operation. For example, the processor 401 may aggregate real-time data from the force sensors 311 to detect changes in the load's position or distribution. If the COG exceeds a predetermined safety threshold, the control system 200 may initiate corrective actions, such as adjusting velocity or alerting the operator. In the depicted vehicle 100, the processor 401 may execute safety operations if the COG exceeds specific thresholds. For instance: If the COG height (Z-axis) exceeds a first threshold, the system may reduce the vehicle's velocity. If the COG exceeds a second, more critical threshold, the system may prevent vehicle movement entirely to avoid tipping or instability.

The vehicle 100 illustrated may be adaptable for various applications, including autonomous mobile robots (AMRs) or automated guided vehicles (AGVs). In such cases, the control system 200 and mobility system 120 may operate without human intervention, relying on the processor 401 and force sensors 311 to ensure safe and efficient load transport.

FIG. 8 shows an example of a method. The method may include: receiving 801 sensor data representing force measurements along at least a first axis of a vehicle from at least two sensors; determining 802 sensor positions of the at least two sensors along a second axis and a third axis, wherein the second axis and the third axis are perpendicular to the first axis; instructing 803 a vehicle control system to move the vehicle with an acceleration for a period of time; and determining 804 a center of gravity location along the first axis for a load applying force to the at least two sensors based on the sensor positions, the sensor data representing the force measurements during the period of time, and the acceleration. A non-transitory computer readable medium may include instructions which, if executed by a processor, cause the processor to perform the method.

The following examples pertain to further aspects of this disclosure.

Example 1 includes a subject matter of a device of a vehicle; the device including: an interface configured to receive sensor data representing force measurements along at least a first axis of the vehicle from at least two sensors; a processor configured to: determine sensor positions of the at least two sensors along a second axis a the third axis, wherein the second axis and the third axis are perpendicular to the first axis; provide instructions to a vehicle control system to control the vehicle with an acceleration for a period of time; determine a center of gravity location along the first axis for a load applying force to the at least two sensors based on the sensor positions , the sensor data representing the force measurements during the period of time, and the acceleration.

Example 2 may include the subject matter of example 1, wherein the processor is further configured to determine a center of gravity location along the second axis and the third axis based on the sensor positions and the sensor data.

Example 3 may include the subject matter of example 1 or example 2, wherein the acceleration for the period of time is predefined and/or determined based on one or more operational characteristics of the vehicle.

Example 4 may include the subject matter of example 1 or example 2, wherein the acceleration is determined based on information received from at least one of motor encoders, wheel encoders, or further sensors configured to measure acceleration.

Example 5 may include the subject matter of any one of examples 1 to 4, wherein the processor is further configured to determine a result representing whether the center of gravity location along the first axis satisfies one or more safety thresholds; and provide instructions to the vehicle control system to perform a safety action based on the result.

Example 6 may include the subject matter of example 5, wherein the processor is further configured to: limit a velocity of the vehicle and/or adjust a braking distance of the vehicle if the center of gravity location exceeds a first threshold of the one or more safety thresholds; and/or prevent movement of the vehicle if the center of gravity location exceeds a second threshold of the one or more safety thresholds.

Example 7 may include the subject matter of any one of examples 1 to 6, wherein the processor is further configured to calculate a mass of the load based on a total force measured along the first axis by summing the sensor data of the at least two sensors and applying a gravitational constant.

Example 8 may include the subject matter of any one of examples 1 to 7, wherein the processor is further configured to calculate the center of gravity location along the first axis based on a set of equations according to the sensor data representing measured forces along the second and third axes, the sensor positions, and the acceleration.

Example 9 may include the subject matter of example 8, wherein the processor is further configured to calculate the center of gravity location along the second axis and the third axis based on the sensor data representing the force measurements when the vehicle is stationary.

Example 10 may include the subject matter of example 9, wherein the processor is further configured to calculate the center of gravity location along the first axis based on the sensor data representing the force measurements during the period of time.

Example 11 may include the subject matter of example 10, wherein the processor is further configured the center of gravity location along the first axis, the second axis, and the third axis based on the sensor positions relative to a predefined point of origin.

Example 12 may include the subject matter of example 11, wherein the processor is further configured to determine a center of gravity height along the first axis using the following equation: $Z_{cg} = \frac{\sum_i F_{cli} \cdot X_i - F_{mg} \cdot X_{cg}}{\sum_i F_{cli} \cdot a}$ where $F_{cli}$ represents a respective force measured by i-th sensor of the at least two sensors, $X_i$ represents a position of the i-th sensor along the second axis, $F_{mg}$ represents the total measured force of the load along the first axis, $X_{cg}$ represents the center of gravity location along the second axis, and a represents the acceleration.

Example 13 may include the subject matter of any one of examples 1 to 12, wherein the acceleration is in a direction along the second axis.

Example 14 may include a vehicle including: the device of any one of examples 1 to 13; a carrier structure configured to carry the load; and the at least two sensors coupled to the interface.

Example 15 may include the vehicle of example 14, wherein the at least two sensors are disposed beneath the carrier structure along the first axis at distinct locations along at least the second axis.

Example 16 may include the vehicle of example 14 or 15, may further include the vehicle control system configured to control movement of the vehicle.

Example 17 may include the vehicle of any one of examples 14 to 16, wherein the at least two sensors include load cells.

Example 18 may include the vehicle of any one of examples 14 to 17, wherein the processor is further configured to monitor the center of gravity location at the first axis over time by calculating a plurality of center of gravity locations for the load and to determine a safety operation if a center of gravity location exceeds a predetermined threshold.

Example 19 may include the vehicle of any one of examples 14 to 18, wherein the processor is further configured to provide instructions to the vehicle control system to at least one of: limit maximum velocity of the vehicle; adjust minimum braking distance of the vehicle; and/or prevent the movement of the vehicle.

Example 20 may include the vehicle of any one of examples 14 to 19, wherein the vehicle is one of an unmanned vehicle; an autonomous mobile robot, or an automated guided vehicle.

Example 21 may include the subject matter of a method for a vehicle, the method including: receiving sensor data representing force measurements along at least a first axis of the vehicle from at least two sensors; determining sensor positions of the at least two sensors along a second axis and a third axis, wherein the second axis and the third axis are perpendicular to the first axis; providing instructions to a vehicle control system to control the vehicle with an acceleration for a period of time; and determining a center of gravity location along the first axis for a load applying force to the at least two sensors based on the sensor positions, the sensor data representing the force measurements during the period of time, and the acceleration.

Example 22 may include the subject matter of 21, may further include determining a center of gravity location along the second axis and the third axis based on the sensor positions and the sensor data.

Example 23 may include the subject matter of 21 or 22, wherein the acceleration for the period of time is predefined and/or determined based on one or more operational characteristics of the vehicle.

Example 24 may include the subject matter of 21 or 22, may further include determining the acceleration based on information received from at least one of motor encoders, wheel encoders, or further sensors configured to measure acceleration.

Example 25 may include the subject matter of any one of 21 to 24, may further include: determining a result representing whether the center of gravity location along the first axis satisfies one or more safety thresholds; and providing instructions to the vehicle control system to perform a safety action based on the result.

Example 26 may include the subject matter of 25, wherein the safety action includes: limiting a velocity of the vehicle and/or adjusting a braking distance of the vehicle if the center of gravity location exceeds a first threshold of the one or more safety thresholds; and/or preventing movement of the vehicle if the center of gravity location exceeds a second threshold of the one or more safety thresholds.

Example 27 may include the subject matter of any one of 21 to 26, may further include calculating a mass of the load based on a total force measured along the first axis by summing the sensor data of the at least two sensors and applying a gravitational constant.

Example 28 may include the subject matter of any one of 21 to 27, may further include calculating the center of gravity location along the first axis based on a set of equations according to the sensor data representing measured forces along the second and third axes, the sensor positions, and the acceleration.

Example 29 may include the subject matter of 28, may further include calculating the center of gravity location along the second axis and the third axis based on the sensor data representing the force measurements when the vehicle is stationary.

Example 30 may include the subject matter of 29, may further include calculating the center of gravity location along the first axis based on the sensor data representing the force measurements during the period of time.

Example 31 may include the subject matter of 30, may further include calculating the center of gravity location along the first axis, the second axis, and the third axis based on the sensor positions relative to a predefined point of origin.

Example 32 may include the subject matter of 31, may further include determining a center of gravity height along the first axis using the equation: $Z_{cg} = \dfrac{\sum_i F_{cli} \cdot X_i - F_{mg} \cdot X_{cg}}{\sum_i F_{cli} \cdot a}$ where $F_{cli}$ represents a respective force measured by i-th sensor of the at least two sensors, $X_i$ represents a position of the i-th sensor along the second axis, $F_{mg}$ represents the total measured force of the load along the first axis, $X_{cg}$ represents the center of gravity location along the second axis, and a represents the acceleration.

Example 33 may include the subject matter of any one of 21 to 32, wherein the acceleration is in a direction along the second axis.

Example 34 may include the subject matter of any one of 21 to 33, may further include operating the vehicle that includes: a carrier structure configured to carry a load; at least two sensors coupled to an interface; and a processor configured to receive sensor data from the sensors and calculate a center of gravity location of the load based on the sensor data, and adjusting the movement of the vehicle based on the center of gravity location.

Example 35 may include the subject matter of 34, wherein the at least two sensors are disposed beneath the carrier structure along the first axis at distinct locations along at least the second axis.

Example 36 may include the subject matter of 34 or 35, may further include controlling movement of the vehicle based on the calculated center of gravity location.

Example 37 may include the subject matter of a non-transitory computer-readable medium storing instructions that, when executed by a processor, cause the processor to: receive sensor data representing force measurements along at least a first axis of the vehicle from at least two sensors; determine sensor positions of the at least two sensors along a second axis and a third axis, wherein the second axis and the third axis are perpendicular to the first axis; instruct a vehicle control system to control the vehicle with an acceleration for a period of time; and determine a center of gravity location along the first axis for a load applying force to the at least two sensors based on the sensor positions, the sensor data representing the force measurements during the period of time, and the acceleration.

Example 38 may include the subject matter of example 37, may further include instructions to determine a center of gravity location along the second axis and the third axis based on the sensor positions and the sensor data.

Example 39 may include the subject matter of example 37 or example 38, may further include instructions to determine the acceleration for the period of time based on one or more operational characteristics of the vehicle.

Example 40 may include the subject matter of example 37 or example 38, may further include instructions to determine the acceleration based on information received from at least one of motor encoders, wheel encoders, or further sensors configured to measure acceleration.

Example 41 may include the subject matter of any one of examples 37 to 40, may further include instructions to: determine a result representing whether the center of gravity location along the first axis satisfies one or more safety thresholds; and instruct the vehicle control system to perform a safety action based on the result.

Example 42 may include the subject matter of example 41, may further include instructions to: limit a velocity of the vehicle and/or adjust a braking distance of the vehicle if the center of gravity location exceeds a first threshold of the one or more safety thresholds; and/or prevent movement of the vehicle if the center of gravity location exceeds a second threshold of the one or more safety thresholds.

Example 43 may include the subject matter of any one of examples 37 to 42, may further include instructions to calculate a mass of the load based on a total force measured along the first axis by summing the sensor data of the at least two sensors and applying a gravitational constant.

Example 44 may include the subject matter of any one of examples 37 to 43, may further include instructions to calculate the center of gravity location along the first axis based on a set of equations according to the sensor data representing measured forces along the second and third axes, the sensor positions, and the acceleration.

Example 45 may include the subject matter of example 44, may further include instructions to calculate the center of gravity location along the second axis and the third axis based on the sensor data representing the force measurements when the vehicle is stationary.

Example 46 may include the subject matter of example 45, may further include instructions to calculate the center of gravity location along the first axis based on the sensor data representing the force measurements during the period of time.

Example 47 may include the subject matter of example 46, may further include instructions to calculate the center of gravity location along the first axis, the second axis, and the third axis based on the sensor positions relative to a predefined point of origin.

Example 48 may include the subject matter of example 47, may further include instructions to determine a center of gravity height along the first axis using the equation: $Z_{cg} = \frac{\sum_i F_{cli} \cdot X_i - F_{mg} \cdot X_{cg}}{\sum_i F_{cli} \cdot a}$ where $F_{cli}$ represents a respective force measured by i-th sensor of the at least two sensors, $X_i$ represents a position of the i-th sensor along the second axis, $F_{mg}$ represents the total measured force of the load along the first axis, $X_{cg}$ represents the center of gravity location along the second axis, and a represents the acceleration.

Example 49 may include the subject matter of any one of examples 37 to 48, wherein the acceleration is in a direction along the second axis.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electromagnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

All acronyms defined in the above description additionally hold in all claims included herein.

**Claims**

1.    A device of a vehicle; the device comprising:

   an interface configured to receive sensor data representing force measurements along at least a first axis of the vehicle from at least two sensors;
   a processor configured to:

      determine sensor positions of the at least two sensors along a second axis and a third axis, wherein the second axis and the third axis are perpendicular to the first axis;
      provide instruction to a vehicle control system to control the vehicle with an acceleration for a period of time;
      determine a center of gravity location along the first axis for a load applying force to the at least two sensors based on the sensor positions , the sensor data representing the force measurements during the period of time, and the acceleration.

2.    The device of claim 1, wherein the processor is further configured to determine a center of gravity location along the second axis and the third axis based on the sensor positions and the sensor data.

3.    The device of claim 1 or claim 2, wherein the acceleration for the period of time is predefined or determined based on one or more operational characteristics of the vehicle.

4.    The device of claim 1 or claim 2, wherein the acceleration is determined based on information received from at least one of motor encoders, wheel encoders, or further sensors configured to measure acceleration.

5.    The device of any one of claims 1 to 4, wherein the processor is further configured to determine a result representing whether the center of gravity location along the first axis satisfies one or more safety thresholds; and provide instruction to the vehicle control system to perform a safety action based on the result.

6.    The device of claim 5, wherein the processor is further configured to:

   limit a velocity of the vehicle or adjust a braking distance of the vehicle if the center of gravity location exceeds a first threshold of the one or more safety thresholds; or
   prevent movement of the vehicle if the center of gravity location exceeds a second threshold of the one or more safety thresholds.

7. The device of any one of claims 1 to 6, wherein the processor is further configured to calculate a mass of the load based on a total force measured along the first axis by summing the sensor data of the at least two sensors and applying a gravitational constant.

8. The device of any one of claims 1 to 7, wherein the processor is further configured to calculate the center of gravity location along the first axis based on a set of equations according to the sensor data representing measured forces along the second and third axes, the sensor positions, and the acceleration.

9. The device of claim 8, wherein the processor is further configured to calculate the center of gravity location along the second axis and the third axis based on the sensor data representing the force measurements when the vehicle is stationary.

10. The device of claim 9, wherein the processor is further configured to calculate the center of gravity location along the first axis based on the sensor data representing the force measurements during the period of time.

11. The device of claim 10, wherein the processor is further configured the center of gravity location along the first axis, the second axis, and the third axis based on the sensor positions relative to a predefined point of origin.

12. The device of claim 11, wherein the processor is further configured to determine a center of gravity height along the first axis using the following equation:

$$Z_{cg} = \frac{\sum_i F_{cli} \cdot X_i - F_{mg} \cdot X_{cg}}{\sum_i F_{cli} \cdot a}$$

where $F_{cli}$ represents a respective force measured by i-th sensor of the at least two sensors, $X_i$ represents a position of the i-th sensor along the second axis, $F_{mg}$ represents the total measured force of the load along the first axis, $X_{cg}$ represents the center of gravity location along the second axis, and a represents the acceleration.

13. The device of any one of claims 1 to 12, wherein the acceleration is in a direction along the second axis.

14. A vehicle comprising:

the device of any one of claims 1 to 13;
a carrier structure configured to carry the load; and
the at least two sensors coupled to the interface.

15. A non-transitory computer-readable medium storing instructions that, when executed by a processor, cause the processor to:

receive sensor data representing force measurements along at least a first axis of the vehicle from at least two sensors;
determine sensor positions of the at least two sensors along a second axis and a third axis, wherein the second axis and the third axis are perpendicular to the first axis;
instruct a vehicle control system to move the vehicle with an acceleration for a period of time; and
determine a center of gravity location along the first axis for a load applying force to the at least two sensors based on the sensor positions, the sensor data representing the force measurements during the period of time, and the acceleration.

FIG. 1

200

| 112 | 112 | 112 | 112 | 114 GNSS | 116 Measurement |

102

**214 Data Acquisition Processor**

**216 Application Processor**

**218 Communication Processor**

**104 Memory**

**204 Map DB**

**206 User interfaces**

**108 RF**

**108 RF**

**108 RF**

106

# FIG. 2

311    301

321
301 311

311    Load

Force
Sensors x4

Force
Sensors x4

Z-axis
(For Side View)

100

Top View              Side View

# FIG. 3

PROCESSOR
401

MEMORY
402

INTERFACE
403

DEVICE 400

SENSORS
411

# FIG. 4

501 INSTRUCT VEHICLE TO OPERATE IN A STATIONARY CONFIGURATION

502 INITATE A MOVEMENT OF THE VEHICLE WITH A KNOWN ACCELERATION

503 PERFORM FORCE MEASUREMENTS FOR A LOAD DURING THE MOVEMENT

504 DETERMINE COG LOCATION OF THE LOAD

505 COG LOCATION EXCEEDS FIRST THRESHOLD

YES

506 COG LOCATION EXCEEDS SECOND THRESHOLD

YES

NO 511 NO ACTION

NO 512 FIRST DEGREE ACTION

513 SECOND DEGREE ACTION

FIG. 5

FIG. 6

| MOBILITY SYSTEM 120 | DEVICE 400 | CARRIER STRUCTURE 301 |
|---|---|---|
| CONTROL SYSTEM 200 | | FORCE SENSORS 311 |

VEHICLE 100

FIG. 7

801
Receiving, via an interface, sensor data representing force measurements along at least a first axis of the vehicle from at least two sensors

802
Determining sensor positions of the at least two sensors along a second axis and a third axis, wherein the second axis and the third axis are perpendicular to the first axis;

803
Instructing a vehicle control system to move the vehicle with an acceleration for a period of time

804
Determining a center of gravity location along the first axis for a load applying force to the at least two sensors based on the sensor positions, the sensor data representing the force measurements during the period of time, and the acceleration

FIG. 8

| | Europäisches Patentamt<br>European Patent Office<br>Office européen des brevets | **EUROPEAN SEARCH REPORT** | **Application Number**<br>EP 24 22 3186 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | DE 10 2022 112684 A1 (SCHAEFFLER TECHNOLOGIES AG [DE]) 23 November 2023 (2023-11-23) | 1-3,5, 13-15 | INV.<br>B60W40/13 |
| Y | * paragraphs [0030] - [0050] * | 7 | |
| A | | 8-12 | |
| | ----- | | |
| X | DE 10 2020 133277 A1 (ZF CV SYSTEMS GLOBAL GMBH [CH]) 15 June 2022 (2022-06-15) | 1-6, 13-15 | |
| Y | * paragraphs [0025] - [0068] * | 7 | |
| | ----- | | |
| Y | DE 10 2021 201460 A1 (VOLKSWAGEN AG [DE]) 18 August 2022 (2022-08-18) * paragraph [0021] * | 7 | |
| | ----- | | |

| TECHNICAL FIELDS<br>SEARCHED (IPC) |
|---|
| B60W |

The present search report has been drawn up for all claims

| Place of search | Date of completion of the search | Examiner |
|---|---|---|
| Munich | 13 June 2025 | Stolle, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3186

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | Publication date | Patent family member(s) | Publication date |
|---|---|---|---|
| DE 102022112684 A1 | 23-11-2023 | NONE | |
| DE 102020133277 A1 | 15-06-2022 | NONE | |
| DE 102021201460 A1 | 18-08-2022 | NONE | |

EPO FORM P0459

For more details about this annex : see Official Journal of the European Patent Office, No. 12/82